# EUROPÄISCHE PATENTSCHRIFT

(11) **EP 1 604 067 B1**
(45) Veröffentlichungstag und Bekanntmachung des Hinweises auf die Patenterteilung: **06.08.2008**
(21) Anmeldenummer: 04720844.2
(22) Anmeldetag: 16.03.2004
(51) Int. Cl.: E02D 3/12, C09K 17/00, C09K 3/10, C04B 26/02

(54) **VERFAHREN ZUM ABDICHTEN VON BAUWERKEN**
METHOD FOR SEALING CONSTRUCTIONS
PROCEDE D'ETANCHEIFICATION D'OUVRAGES DE CONSTRUCTION

(30) Priorität: 19.03.2003 DE 10312325
(43) Veröffentlichungstag der Anmeldung: 14.12.2005
(73) Patentinhaber: Consolid Technik Deutschland GMBH, 64625 Bensheim (DE); Sächsische Bau GMBH, 01099 Dresden (DE)
(72) Erfinder: ASENDORF, Knut, 55543 Bad Kreuznach (DE); KITTLER, Falk, 09557 Flöha (DE)
(74) Vertreter: Weber, Roland
(86) Internationale Anmeldenummer: PCT/DE2004/000528
(87) Internationale Veröffentlichungsnummer: WO 2004/083532

(56) Entgegenhaltungen:
- EP-A- 1 155 732
- GIURGEA V. I.: "Hydrogeologische und geotechnische Voraussetzungen für die Anlage von Standorten zur Lagerung radioaktiver Reststoffe unter Berücksichtigung des Consolid-System" 1999, PROF. DR. KURT CZURDA UND PROF. DR. HEINZ HÖTZL, LEHRSTUHL FÜR ANGEWANDTE GEOLOGIE DER UNIVERSITÄT KARLSRUHE , KARLSRUHE , XP002289135 Seiten 23-34

## Beschreibung

Die Erfindung betrifft ein Verfahren zum Abdichten von Bauwerken, insbesondere Erdbauwerken.

Aus dem Stand der Technik sind Mittel und Verfahren zum Abdichten von Bauwerken, beispielsweise Dämmen und Deichen, bekannt, die Beton, zum Beispiel WU-Beton, als Dichtmittel verwenden. Der wasserundurchlässige Beton kann durch Schlitzwände oder Spundbohrungen in bereits bestehende Deiche eingebracht werden. Diese Vorgehensweise ist jedoch gerade bei Deichen nachteilig, da ein starrer Körper innerhalb des Deiches gebildet wird, der Baugrundverschiebungen nicht kompensieren kann, so daß es zu Brüchen und Rissen in der Betonabdichtung kommen kann. Risse in der Abdichtung führen jedoch dazu, daß der Deich oder im allgemeinen das Bauwerk wieder wasserdurchlässig wird und die Gefahr der Unterspülung besteht.

Dem gegenüber bietet der Einsatz von tonigen Mischungen zum Abdichten von Bauwerken, früher als "Lehmschlag" bekannt, den Vorteil, daß diese Art der Abdichtung keinen starren Dichtungskörper bildet, so daß Baugrundverschiebungen kompensiert werden und keine Undichtigkeiten auftreten können. Abdichtungen von Bauwerken aus tonigen Mischungen haben eine in etwa gleich hohe Wasserundurchlässigkeit wie Abdichtungen mit Hilfe von Beton. Lehmschläge auf der Dammaußenseite sind außerdem relativ aufwendig, erfordern viel Baumaterial, zerstören das Biotop auf der Dammoberfläche und haben keine besonders hohen Lebensdauern. Sie sind außerdem auf die Verwendung bei Dämmen oder Deichen beschränkt, die zumindest während der Bauphase trocken liegen können.

Die Veröffentlichung von V. I. Giurgea "Hydrogeologische und geotechnische Voraussetzungen für die Anlage von Standorten zur Lagerung radioaktiver Reststoffe unter Berücksichtigung des Consolidsystems" 1999, Professor Dr. Kurt Szurda und Professor Dr. Hein Hötzl, Lehrstuhl für angewandte Geologie der Universität Karlsruhe, Karlsruhe, XP 002289135 offenbart sowohl ein Abdichtmittel aus einem Gemisch aus Erdstoff und einem das Hüllwasser um das Korn aufbrechenden Zusatzstoff, als auch die Verwendung eines solchen Gemisches zur oberflächlichen Abdichtung eines Bauwerks. Aus dieser Veröffentlichung ist auch ein Abdichtmittel bekannt, das aus einem Gemisch aus Erdstoff, vorzugsweise tonigen Materialien und/oder Schluff und einem das Hüllwasser um das Korn aufbrechenden Zusatzstoff besteht, wobei ein Kubikmeter Erdstoff bis zu 0,5 Vol.-% des Zusatzstoffes enthält.

Aus der EP 1 155 732 A1 ist ein Verfahren zur Behandlung von Rückständen aus Rauchgasreinigungs- und/oder Rauchgasentschwefelungsanlagen bekannt. Durch Vermischen der Rückstände aus Rauchgasreinigungs- und/oder Rauchgasentschwefelungsanlagen von Raffinerien mit Wasser, Erhitzen, Zugabe von Kalk und weiterem Erhitzen des Gemischs auf Siedetemperatur erfolgt eine chemische Reaktion, bei der Ammoniak entweicht. Anschließend wird das Gemisch abgekühlt. Dabei beträgt der pH-Wert mindestens 8. In der vom Prozeßwasser getrennten feucht-festen Phase sind die Schwermetalle in wasserunlöslicher Form gebunden. Das Endprodukt des Verfahrens ist eine Trockensubstanz, die gefahrlos deponiert oder zu einem Wirtschaftsgut weiterverarbeitet werden kann, beispielsweise zu Baumaterial.

Gegenüber dem Stand der Technik liegt der Erfindung die Aufgabe zugrunde, ein Verfahren zum Abdichten von Bauwerken zur Verfügung zu stellen, welches eine flexible, hochgradig dichte, preiswerte und dauerhafte zur Abdichtung von neuen und bereits bestehenden Bauwerken durch Einbringen einer Kernabdichtung ermöglicht.

Diese Aufgabe wird durch ein Verfahren gemäß dem unabhängigen Anspruch 1 gelöst.

Dabei besteht das verwendete Mittel zum Abdichten von Bauwerken vorzugsweise aus einem Gemisch aus tonigen Materialien und einem das Hüllwasser um das Korn des Erdstoffes aufbrechenden Zusatzstoff, wobei 1 m³ Erdstoff bis zu 0,5 Vol.-%, vorzugsweise zwischen 0,01 Vol.-% und 0,1 Vol.-% und besonders bevorzugt 0,03 Vol.-% des Zusatzstoffes enthält. Gegenüber den herkömmlichen tonigen Mischungen, wie z.B. Betonit, zeigt dieses modifizierte Erdstoffgemisch eine wesentlich verbesserte Abdichtung, wobei die flexiblen Eigenschafen der tonigen Mischungen aus dem Stand der Technik erhalten bleiben. Bei dem erfindungsgemäßen Mengenverhältnis zwischen Zusatzstoff und Erdstoff wird eine optimale Wasserundurchlässigkeit erreicht. Dabei sollte die Konzentration des Zusatzstoffes 0,5 Vol.-% nicht wesentlich übersteigen, da bei höheren Konzentrationen der Zusatzstoff filmbildend um den Erdstoff wirkt.

Das Einbringen des erfindungsgemäßen Zusatzstoffes in das Erdstoffgemisch führt offenbar durch Aufbrechen der das einzelne Korn im allgemeinen umgebenden Wasserhülle zu einer besseren Koagulation aufgrund der stärkeren Adhäsionskräfte, mit denen die einzelnen Partikel des Erdstoffes nach dem Aufbrechen ihrer Wasserhülle aneinander haften können. Durch Verwendung des Zusatzstoffes in der bevorzugten Ausführungsform der Erfindung führt dies dazu, dass das Gemisch eine kompakte, zähplastische und wasserundurchlässige Konsistenz erhält. Auch nach einem zwangsweisen Austrocknen bliebt das Gemisch stabil und nimmt bei Aufnahme einer geringen Wassermenge sofort wieder die zähplastische, wasserundurchlässige Konsistenz an. Aufgrund der starken Kohäsion zwischen den Körnern kann die Abdichtung weder durchwurzelt werden, noch von Kleingetier befallen werden. Darüberhinaus sind jederzeit Anschlußarbeiten möglich, da das Gemisch nicht abbindet. Ein Auskolken des Injektionskörpers bei strömendem Wasser findet nicht statt.

In einer bevorzugten Ausführungsform ist der Zusatzstoff ein Polymer, insbesondere ein polymeres (Meth)Acrylamid. Bei der Verwendung von polymeren Zusatzstoffen werden K-Werte um 10⁻⁹ m/Sekunde erreicht. Eine mögliche Erklärung für das Erreichen der hohen K-Werte könnte die dichte Lagerung der Erdstoffbestandteile und das Ausfüllen der Poren im Gefüge durch die Tonpartikel sein.

Besonders bevorzugt wird darüber hinaus eine Ausführungsform der Erfindung, bei der der Zusatzstoff verseifte Paraffine enthält. Die Verwendung des polymeren (Meth)Acrylamids in Verbindung mit verseiften Paraffinen ist ökologisch unbedenklich, so daß das Mittel zum Abdichten in allen Grundwasserzonen verwendet werden kann. Eine Bindemittelfunktion ist aufgrund der geringen Konzentration des Zusatzstoffes nicht möglich und gewünscht und erfolgt auch nicht durch etwaige Zement oder Kalkbeimengungen, deren Konzentration hierfür ebenfalls zu gering wäre. Es findet keine chemische Reaktion mit dem Zusatzstoff statt, sondern dieser wirkt im wesentlichen hydrophobierend auf das Korn. Seine Wirkung ist vergleichbar mit der eines Katalysators.

Es ist zweckmäßig, wenn der Erdstoff in der vorliegenden Erfindung Ton und/oder Schluff enthält. Als besonders vorteilhaft hat sich ein Anteil von mindestens 10 Gew.-%, vorzugsweise mindestens 15 Gew.-% Ton und/oder Schluff in dem Erdstoff herausgestellt. Gerade die feinkörnigen Bestandteile wie Ton oder Schluff des Erdstoffes ermöglichen in Verbindung mit dem Zusatzstoff die Bildung einer kompakten, zähplastischen und wasserundurchlässigen Masse.

In einer bevorzugten Ausführungsform der Erfindung ist dem Gemisch ein Anteil Zement und/oder Kalk, welcher seinerseits einen Anteil von 1 Gew.-% bis 10 Gew.-%, vorzugsweise 3,5 Gew.-% des Zusatzstoffes enthält, beigemengt. Diese Beimengung ist vorteilhaft, da sie den Zusatzstoff verdünnt und beispielsweise die gleichmäßige Verteilung des Zusatzstoffes beim Einspritzen des Gemisches in ein bereits bestehendes Bauwerk erleichtert. Besonders bevorzugt wird dabei eine Ausführungsform der Erfindung, bei der einem Kubikmeter Erdstoff zwischen 15 kg und 25 kg, vorzugsweise 20 kg des den Zusatzstoff enthaltenden Zements oder Kalks beigemengt ist. Diese Menge ermöglicht eine optimale Verdünnung des Zusatzstoffes bei der Injektion in ein bestehendes Bauwerk. Die Vermengung von Zusatzstoff und Zement und/oder Kalk kann werksseitig, d.h. nicht auf der Baustelle, erfolgen.

Um das Gemisch fließfähig zu machen ist es zweckmäßig, wenn dem Gemisch ein Anteil zwischen 20 Gew.-% und 50 Gew.-%, vorzugsweise zwischen 25 Gew.-% und 40 Gew.-% und besonders bevorzugt zwischen 30 Gew.-% und 35 Gew.-% an Wasser beigemengt ist. Bei diesem Wassergehalt besitzt das Gemisch thixotrope Eigenschaften, d.h. das Material läßt sich pumpen und fördern, wird jedoch geleeartig fest, sobald es zur Ruhe kommt. Nach dem Austreten des überschüssigen Wassers wird die Proctordichte des Gemisches erreicht, d.h. bei diesem Wassergehalt wird eine optimale Verdichtung des Erdstoffes und des Zusatzstoffes erreicht.

Hinsichtlich des Verfahrens wird die der Erfindung zugrunde liegende Aufgabe dadurch gelöst, daß ein Gemisch aus Erdstoff und einem Zusatzstoff, so wie er zuvor beschrieben wurde, in ein Bauwerk eingespritzt wird. Diese Vorgehensweise ermöglicht es, ein bereits bestehendes Bauwerk nachträglich, also auch Jahre nach seiner Erbauung, abzudichten.

In einer bevorzugten Ausführungsform der Erfindung werden zunächst in das Bauwerk Löcher gebohrt, deren Wände stabilisiert werden. Anschließend wird der Erdstoff aus den Wänden der Löcher herausgespült und ein Gemisch aus Erdstoff und einem Zusatzstoff, so wie er zuvor beschrieben wurde, in das Loch eingepreßt. Dieses Verfahren ermöglicht es, den Zusatzstoff auch in Bauwerke einzubringen, deren Erdstoff bereits derart stark verfestigt ist, daß der Zusatzstoff nicht durch Hohlräume und/oder poröse Zwischenräume des Erdstoffs eingebracht werden kann.

In einer besonders bevorzugten Ausführungsform werden die Wände der Bohrlöcher mit einem Rohr, das Schlitze aufweist, abgestützt und der Erdstoff durch die Schlitze ausgespült und das Gemisch aus Erdstoff und einem Zusatzstoff, so wie er zuvor beschrieben wurde, durch dieselben oder andere, benachbarte Schlitze oder Öffnungen in das Bauwerk eingepreßt. Das Abstützen der Bohrlöcher mit einem Schlitzrohr verhindert, daß die Wände der Bohrlöcher während der Arbeiten einfallen und so das Einbringen der Abdichtung in das Bauwerk behindern. Dabei verbleibt das Schlitzrohr vorteilhafterweise während aller Abschnitte in dem Bohrloch.

In einer besonders bevorzugten Ausführungsform des erfindungsgemäßen Verfahrens erfolgt das Ausspülen des Erdstoffs sowie das Einbringen des Gemisches aus Erdstoff und Zusatzstoff in einem Arbeitsgang.

In Abhängigkeit von der Baugrundzusammensetzung kann es zweckmäßig sein, wenn dem Gemisch aus Erdstoff und einem einem Zusatzstoff, so wie er zuvor beschrieben wurde, zusätzlich Stoffe mit einem hohen Feinanteil, vorzugsweise Ton und/oder Schluff, zugesetzt werden. Dies ermöglicht es, auch Bauwerke, deren Erdstoff nur geringe Feinanteile enthält, mit dem zuvor genannten Verfahren nachträglich sehr wirksam abzudichten.

Alternativ zu dem genannten Verfahren kann es bei injektionsfähigen Böden vorteilhaft sein, den zuvor beschriebenen Zusatzstoff in Hohlräume, Löcher und/oder in die porösen Zwischenräume des Erdstoffes des Bauwerks direkt zu injizieren, so daß er sich dort mit dem Erdstoff vermischt. Dieses Verfahren ermöglicht die Einbringung des Zusatzstoffes in das Bauwerk mit geringem Aufwand.

In einer bevorzugten Ausführungsform der Erfindung werden rotierende Bohrlanzen zum Einspritzen der Gemisches aus Erdstoff und einem Zusatzstoff verwendet, um mit einem definierten Injektionsdruck einen zylindrischen Körper aus Abdichtungsmaterial in dem Bauwerk aufzubauen.

Weitere Vorteile, Merkmale und Anwendungsmöglichkeiten der vorliegenden Erfindung werden anhand der folgenden Beschreibung einer bevorzugten Ausführungsform und der dazugehörigen Figuren deutlich. Es zeigen:
- Figur 1: eine schematische Darstellung des Austauschprozesses von Erdstoff,
- Figur 2: eine schematische Darstellung der Injektion eines Gemisches aus Erdstoff und Zusatzstoff in ein Bohrloch,
- Figur 3a-c: eine schematische Darstellung des schrittweisen Vorgehens beim Injizieren des Gemisches aus Erdstoff und einem Zusatzstoff in ein Bohrloch,
- Figur 4: eine seitliche Schnittansicht durch einen Flußdeich mit Bohrlöchern,
- Figur 5: eine schematische Schnittansicht eines Tiefbauwerks mit Flächenabdichtung,
- Figur 6: eine schematische Schnittdarstellung eines Tunnelbauwerks mit verschiedenen Abdichtungen, und
- Figur 7: eine Schnittansicht eines Deiches mit Vertikalabdichtung.

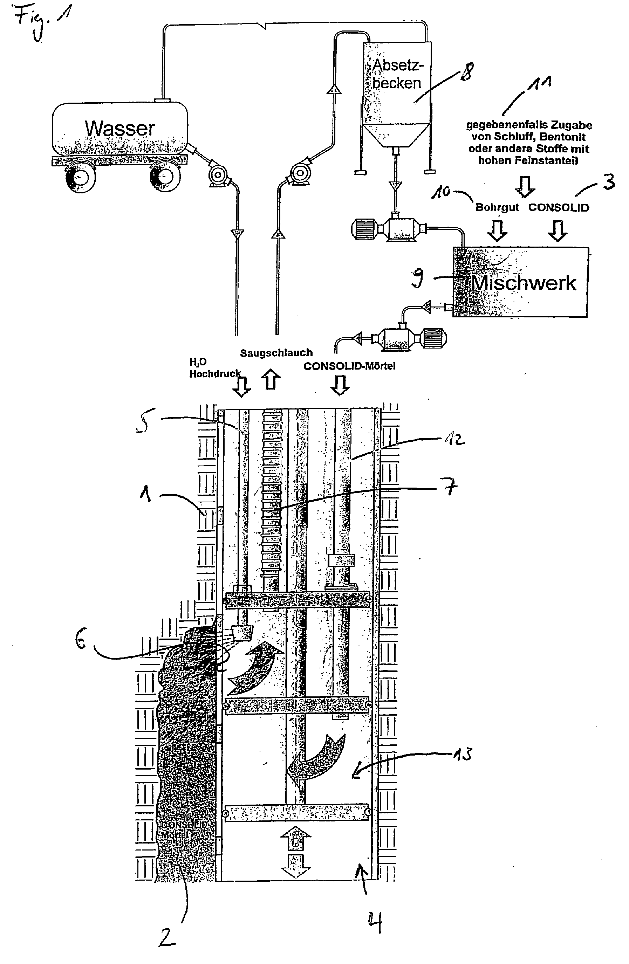

In Figur 1 wird schematisch der Austausch des Erdstoffes 1 durch ein Gemisch aus dem zuvor entnommenen Erdstoff 1 und einem Zusatzstoff 3 gezeigt. In der gezeigten Ausführungsform wird als Zusatzstoff ein polymeres Acrylamid in Verbindung mit verseiften Parafinen verwendet. Dieser Zusatzstoff ist unter dem Handelsnamen Consolid erhältlich. In ein Schlitzrohr 4 wird Wasser unter Hochdruck durch eine Rohrleitung 5 eingeleitet, so daß der Erdstoff an den Schlitzen 6 des Rohres ausgespült wird. Das Gemisch aus Erdstoff und Wasser wird dann über eine Rohrleitung 7 aus dem Schlitzrohr 4 abgesaugt. Nach dem Absetzen in einem Absetzbecken 8 wird das Gemisch aus Erdstoff und Wasser in einem Mischwerk 9 mit Teilen des Bohrguts 10 und dem Zusatzstoff 3 vermischt. Gegebenenfalls kann im Mischwerk Erdstoff mit einem höheren Feinanteil, zum Beispiel Schluff und/oder Ton, beigemischt werden. Das modifizierte Tongemisch 2 wird dann über eine weitere Leitung 12 zurück in einen Bereich 13 unter der Entnahmestelle des Schlitzrohres 4 mit Druck eingebracht. Dort wird er zum Verfüllen der Wandbereich 6, aus denen zuvor Erdstoff 1 ausgespült wurde, verwendet. In einem abschließenden Arbeitsgang wird das Schlitzrohr 4 aus dem Bohrloch gezogen und das Bohrloch mit dem modifizierten Tongemisch 2 verfüllt.

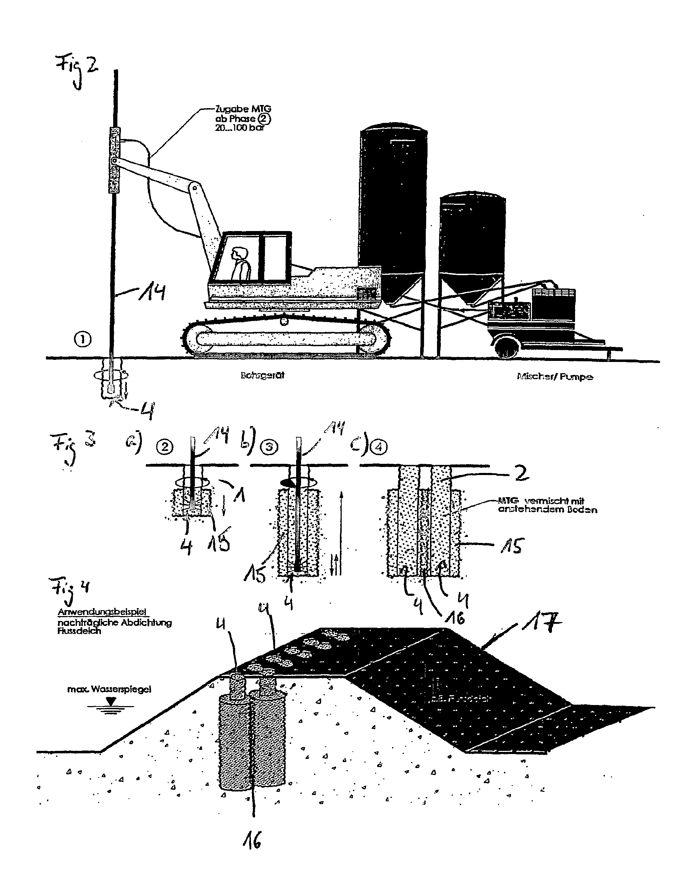

Figur 2 zeigt schematisch das injizieren des modifizierten Tongemisches mit einem Zusatzstoff, hier Consolid, und eventuell zusätzlichen Feinanteilen in ein Bohrloch 4. Dazu wird mit einer rotierenden Bohrlanze 14 ein Loch 4 gebohrt und gleichzeitig das modifizierte Tongemisch 2 eingepreßt.

Besonders deutlich ist dies in den Figuren 3a - c zu erkennen. In Figuren 3a und b sieht man wie während des Bohrens mit der Bohrlanze 14 das modifizierte Tongemisch in das Bohrloch eingepreßt wird. Dabei ist zu erkennen, wie das modifizierte Tongemisch 2 auch in den unmittelbar an das Bohrloch 4 anschließenden Bereichen 15 in den Erdstoff 1 eindringt.

In Figur 3c sind zwei nebeneinanderliegende, bereits mit dem modifizierten Tongemisch 2 verfüllte Bohrlöcher 4 gezeigt. Ihre Rand- bzw. Umgebungsbereiche 15, die ebenfalls von dem modifizierten Tongemisch durchdrungen sind, überlappen sich in einem Bereich 16, so daß sich im Querschnitt eine durchgängige Dichtfläche, gebildet aus dem modifizierten Tongemisch, ergibt.

Figur 4 zeigt die Bildung einer durchgängigen Dichtfläche innerhalb eines Flußdeiches besonders deutlich. Durch die Wahl der Anordnung der Bohrlöcher 4 ergeben sich jeweils überlappende, von dem Abdichtungsgemisch durchsetzte Umgebungsbereiche 16 der Bohrlöcher, so daß eine unterbrechungsfreie Abdichtung eines bereits bestehenden Deiches aufgebaut werden kann, ohne den Deich in seiner gesamten Länge abgraben zu müssen.

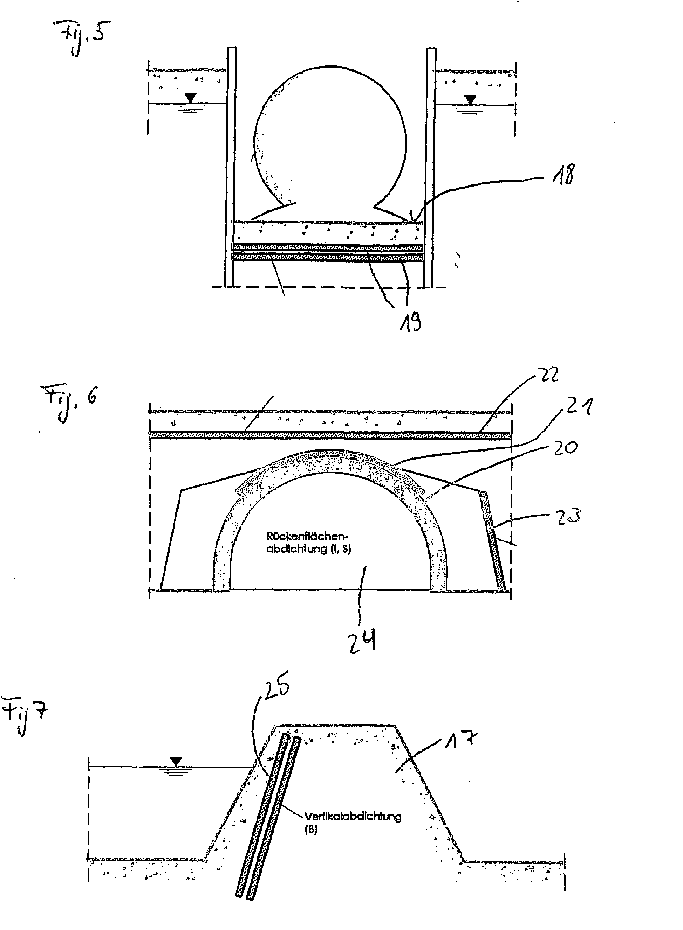

Figur 5 zeigt ein Tiefbauwerk, dessen Bodenfläche 18 mit zwei Dichtflächen 19 aus dem modifizierten Tongemisch 2 abgedichtet wurden.

Figur 6 zeigt einen Tunnel, dessen Rückenfläche 20 im oberen Bereich mit einer Abdichtung 20 aus dem modifizierten Tongemisch 2 versehen wurde. Darüber hinaus ist auch eine Abdichtung 22 aus modifiziertem Tongemisch 2 zu sehen, die den Bereich der Tunnelröhre und des benachbarten Erdreiches abdeckt. Solche Abdeckungen werden häufig im Bereich des U-Bahnbaus verwendet, bei dem über der Tunnelröhre weitere Verkehrsflächen angeordnet sind. Eine weitere Abdichtung 23 im Bereich seitlich der Tunnelröhre 24 kann zum Beispiel das Eindringen von Grundwasser in die Tunnelröhre 24 verhindern.

Figur 7 zeigt eine sogenannte Vertikalabdichtung 20 eines Deiches 17. Dazu werden senkrecht zur Deichkrone Schlitze in den Deich gegraben, in diesem Fall zwei, die mit dem modifizierten Tongemisch 2 zur Abdichtung des Deiches 17 verfüllt werden.

## Patentansprüche

1. Verfahren zum Abdichten von Bauwerken bei dem ein Gemisch aus Erdstoff, vorzugsweise tonigen Materialien und/oder Schluff, und einem das Hüllwasser um das Korn aufbrechenden Zusatzstoff, wobei 1 m³ Erdstoff bis zu 0,5 Vol.-% des Zusatzstoffes enthält verwendet wird, **dadurch gekennzeichnet, daß** das Gemisch als Kernabdichtung in das Bauwerk eingespritzt wird; oder daß der Zusatzstoff in Hohlräume, Löcher und/oder in die porösen Zwischenräume des Erdstoffes des Bauwerks injiziert wird und dort mit dem Erdstoff vermischt wird.

2. Verfahren zum Abdichten von Bauwerken nach Anspruch 1, **dadurch gekennzeichnet, daß** 1 m³ Erdstoff zwischen 0,01 Vol.-% und 0,1 Vol.-% und vorzugsweise 0,03 Vol.-% des Zusatzstoffes enthält.

3. Verfahren zum Abdichten von Bauwerken nach Anspruch 1 oder 2, **dadurch gekennzeichnet, daß** der Zusatzstoff ein Polymer, insbesondere ein polymeres (Meth)Acrylamid ist.

4. Verfahren zum Abdichten von Bauwerken nach einem der Ansprüche 1 bis 3, **dadurch gekennzeichnet, daß** der Zusatzstoff verseifte Paraffine enthält.

5. Verfahren zum Abdichten von Bauwerken nach einem der Ansprüche 1 bis 4, **dadurch gekennzeichnet, daß** der Erdstoff einen Anteil von mindestens 10 Gew.-%, vorzugsweise mindestens 15 Gew.-% Ton und/oder Schluff enthält.

6. Verfahren zum Abdichten von Bauwerken nach einem der Ansprüche 1 bis 5, **dadurch gekennzeichnet, daß** dem Gemisch ein Anteil Zement und/oder Kalk, welcher seinerseits einen Anteil von 1 Gew.-% bis 10 Gew.-%, vorzugsweise 3,5 Gew.-% des Zusatzstoffes enthält, beigemengt ist.

7. Verfahren zum Abdichten von Bauwerken nach Anspruch 6, **dadurch gekennzeichnet, daß** 1 m³ Erdstoff zwischen 15 kg und 25 kg, vorzugsweise 20 kg des den Zusatzstoff enthaltenden Zements oder Kalkes beigemengt ist.

8. Verfahren zum Abdichten von Bauwerken nach einem der Ansprüche 1 bis 7, **dadurch gekennzeichnet, daß** dem Gemisch zur Herstellung seiner Fließfähigkeit ein Anteil zwischen 20 Gew.-% und 50 Gew.-%, vorzugsweise zwischen 20 Gew.-% und 40 Gew.-% und besonders bevorzugt zwischen 30 Gew.-% und 35 Gew.-% an Wasser beigemengt ist.

9. Verfahren zum Abdichten von Bauwerken einem der Ansprüche 1 bis 8, **dadurch gekennzeichnet, daß** in das Bauwerk Löcher gebohrt werden, deren Wände stabilisiert werden, daß der Erdstoff aus den Wänden der Löcher herausgespült wird und anschließend ein Gemisch aus Erdstoff und einem Zusatzstoff nach einem der Ansprüche 1 bis 7 in das Loch eingepreßt wird.

10. Verfahren zum Abdichten von Bauwerken nach einem der Ansprüche 1 bis 9, **dadurch gekennzeichnet, daß** die Wände der Bohrlöcher mit einem Rohr, das Schlitze aufweist, abgestützt werden und der Erdstoff durch die Schlitze ausgespült wird und das Gemisch aus Erdstoff und einem Zusatzstoff nach einem der Ansprüche 1 bis 7 durch die Schlitze in das Bauwerk eingepreßt wird.

11. Verfahren zum Abdichten von Bauwerken nach einem der Ansprüche 1 bis 10, **dadurch gekennzeichnet, daß** dem Gemisch aus dem Erdstoff und einem Zusatzstoff Stoffe mit einem hohen Feinanteil, vorzugsweise Ton und/oder Schluff, zugesetzt werden.

12. Verfahren nach Anspruch 1, **dadurch gekennzeichnet, daß** der Zusatzstoff oder das Gemisch aus Erdstoff und Zusatzstoff über eine rotierende Bohrlanze in das Bauwerk eingespritzt wird.

## Claims

1. A method of sealing constructions using a mixture of soil, preferably argillaceous materials and/or coarse clay, and an additive which breaks open the enclosing water around the grain, wherein 1m³ of soil contains up to 0.5% by volume, of the additive **characterised in that** the mixture is injected into the construction as a core sealing means or that the additive is injected into cavities, holes and/or into the porous intermediate spaces of the soil of the construction and there mixed with the soil.

2. A method of sealing constructions according to claim 1 **characterised in that** 1m³ of soil contains between 0.01% by volume and 0.1 % by volume and preferably 0.03% by volume of the additive.

3. A method of sealing constructions according to claim 1 or claim 2 **characterised in that** the additive is a polymer, in particular a polymeric (meth)acrylamide.

4. A method of sealing constructions according to one of claims 1 to 3 **characterised in that** the additive contains saponified paraffins.

5. A method of sealing constructions according to one of claims 1 to 4 **characterised in that** the soil contains a proportion of at least 10% by weight, preferably at least 15% by weight of clay and/or coarse clay.

6. A method of sealing constructions according to one of claims 1 to 5 **characterised in that** a proportion of cement and/or lime which in turn contains a proportion of 1% by weight to 10% by weight, preferably 3.5% by weight of the additive, is added to the mixture.

7. A method of sealing constructions according to claim 6 **characterised in that** between 15 kg and 25 kg, preferably 20 kg of the cement or lime containing the additive, is added to 1 m³ of soil.

8. A method of sealing constructions according to one of claims 1 to 7 **characterised in that** a proportion of between 20% by weight and 50% by weight, preferably between 20% by weight and 40% by weight and particularly preferably between 30% by weight and 35% by weight of water is added to the mixture to make it capable of flow.

9. A method of sealing constructions according to one of claims 1 to 8 **characterised in that** holes are bored into the construction, the walls of the holes being stabilised, that the soil is flushed out of the walls of the holes and then a mixture of soil and an additive according to one of claims 1 to 7 is pressed into the hole.

10. A method of sealing constructions according to one of claims 1 to 9 **characterised in that** the walls of the bore holes are supported with a tube which has slots and the soil is flushed out through the slots and the mixture of soil and an additive according to one of claims 1 to 7 is pressed into the construction through the slots.

11. A method of sealing constructions according to one of claims 1 to 10 **characterised in that** substances with a high fine proportion, preferably clay and/or coarse clay, are added to the mixture of the soil and an additive.

12. A method according to claim 1 **characterised in that** the additive or the mixture of soil and additive is injected into the construction by way of a rotating boring lance.

## Revendications

1. Procédé d'étanchéification de constructions, utilisant un mélange de terre, de préférence de matériaux argileux et/ou de silt, et un adjuvant qui rompt l'enveloppe d'eau entourant le grain, 1 m³ de terre contenant jusqu'à 0,5 % en volume d'adjuvant, **caractérisé en ce que** le mélange est injecté en tant qu'élément d'étanchéité central dans la construction ; ou **en ce que** l'adjuvant est injecté dans des espaces creux, des trous et/ou dans les espaces intermédiaires poreux de la terre de la construction et est alors mélangé à la terre.

2. Procédé d'étanchéification de constructions selon la revendication 1, **caractérisé en ce que** 1 m³ de terre contient entre 0,01 % en volume et 0,1 % en volume, de préférence 0,03 % en volume d'adjuvant.

3. Procédé d'étanchéification de constructions selon la revendication 1 ou 2, **caractérisé en ce que** l'adjuvant est un polymère, en particulier un méth(acrylamide) polymère.

4. Procédé d'étanchéification de constructions selon l'une quelconque des revendications 1 à 3, **caractérisé en ce que** l'adjuvant contient des paraffines saponifiées.

5. Procédé d'étanchéification de constructions selon l'une quelconque des revendications 1 à 4, **caractérisé en ce que** la terre contient une proportion d'au moins 10 % en poids, de préférence d'au moins 15 % en poids d'argile et/ou de silt.

6. Procédé d'étanchéification de constructions selon l'une quelconque des revendications 1 à 5, **caractérisé en ce qu'**une proportion de ciment et/ou de chaux, qui contient quant à elle une proportion de 1 % en poids à 10 % en poids, de préférence 3,5 % en poids d'adjuvant, est ajoutée au mélange.

7. Procédé d'étanchéification de constructions selon la revendication 6, **caractérisé en ce qu'**entre 15 kg et 25 kg, de préférence 20 kg du ciment ou de la chaux contenant l'adjuvant sont ajoutés à 1 m³ de terre.

8. Procédé d'étanchéification de constructions selon l'une quelconque des revendications 1 à 7, **caractérisé en ce qu'**une proportion comprise entre 20 % en poids et 50 % en poids, de préférence entre 20 % en poids et 40 % en poids et de manière particulièrement préférée entre 30 % en poids et 35 % en poids d'eau est ajoutée au mélange pour assurer sa fluidité.

9. Procédé d'étanchéification de constructions selon l'une quelconque des revendications 1 à 8, **caractérisé en ce que** des trous dont les parois sont stabilisées sont perforés dans la construction, la terre est purgée hors des parois des trous et ensuite un mélange de terre et d'un adjuvant selon l'une quelconque des revendications 1 à 7 est enfoncé dans le trou.

10. Procédé d'étanchéification de constructions selon l'une quelconque des revendications 1 à 9, **caractérisé en ce que** les parois des trous perforés sont soutenues par un tube, présentant des fentes, la terre est purgée à travers les fentes et le mélange de terre et d'un adjuvant selon l'une quelconque des revendications 1 à 7 est enfoncé à travers les fentes dans la construction.

11. Procédé d'étanchéification de constructions selon l'une quelconque des revendications 1 à 10, **caractérisé en ce que** des matériaux présentant une fraction fine élevée, de préférence d'argile et/ou de silt, sont ajoutés au mélange de terre et d'adjuvant.

12. Procédé selon la revendication 1, **caractérisé en ce que** l'adjuvant ou le mélange de terre et d'adjuvant est injecté dans la construction au moyen d'une lance de perforation.
